# EUROPEAN PATENT SPECIFICATION

(11) **EP 0 804 874 B1**
(45) Date of publication and mention of the grant of the patent: **21.11.2001**
(21) Application number: 97202059.8
(22) Date of filing: 29.03.1994
(51) Int. Cl.: A01J 7/00

(54) **A construction for automatically milking animals**
Konstruktion zum automatischen Melken von Tieren
Construction pour la traite automatique d'animaux

(30) Priority: 01.04.1993 NL 9300578
(43) Date of publication of application: 05.11.1997
(62) Divisional of application: 94913203.9
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 302 559
- EP-A- 0 360 354
- EP-A- 0 448 132
- EP-A- 0 532 066

## Description

The present invention relates to a construction for automatically milking animals, such as cows, comprising a milking box with a milking robot having at least two robot arm constructions with carriers for teat cups, which carriers are movable in a horizontal plane and in an up- and downward direction.

Such a construction is known from EP-A1- 0 532 066.

In said document there are four robot arm constructions which are connected to a common frame when they are individually movable in up- and downward direction. Further these robot arm constructions are movable in a horizontal plane. The frame as a whole is movable in such a way that the robot arm constructions are movable from the rear side of an animal between its hind legs; particularly by means of a telescopic supporting structure the carriers of the robot arm constructions with the teat cups are movable between the hind legs of the animal under the animals udder. For the animal, this is a rather unnatural situation, as all of the four carriers of the teat cups together with the supporting structure are moved between the hind legs of the animal, as a result of which the hind legs are forced in a spread position.

In order to overcome these disadvantages the construction, according to the invention, is characterized in that, during milking, the carriers of the teat cups are arranged in an approximately horizontal plane in the shape of a star around the udder of an animal.

In an embodiment according to the invention it is favourable, that during milking, at least one carrier is in a position behind the hind leg of an animal and that at least one other carrier is in a position in front of a hind leg of this animal. In this embodiment the carriers are preferably of a curved shape.

A carrier for one or more teat cups may be capable of being moved from both a rest position, preferably outside the milking box, to a working position, said carrier in this working position being movable in a predominantly horizontal plane in two different directions which are preferably perpendicular to each other. The adjusting means of the carriers, provided for this purpose, are disposed remotely from the udder of the animal, preferably near the wall of the milking box; such a construction enables an accurate and fast manner of coupling of the teat cups to the teats, whilst, if so desired, two or even all four of the teat cups can be coupled to the teats simultaneously.

According to the invention, the construction is furthermore characterized in that during milking, using a flexible connecting element, such as a cable or a cord, a teat cup is connected in a freely moveable manner to a relevant carrier and after milking can be pulled against the end of this carrier. If the teat cups are connected capably of free motion to the carriers, no lateral or other forces are exerted on the teats and the animal is in a comfortable position of being milked by the milking robot. In accordance with a further feature of the invention, the construction is characterized in that, at its side, the teat cup is provided with a bulge which can be pulled with the end of a flexible connecting element into a corresponding shaped recess in the end of a carrier. This measure renders it possible to pull the teat cup, which during milking can move freely with respect to the carrier, in a defined position against the carrier after milking.

For a better understanding of the invention and to show how the same may be carried into effect, reference will now be made, by way of example, to the accompanying drawings, in which:
Figure 1 is a plan view of a milking box, the milking robot comprising two carriers for two teat cups each;
Figure 2 is a side view of the milking box shown in Figure 1;
Figures 3 - 7 show the consecutive positions occupied by the carriers for coupling of the teat cups;
Figure 8 is a plan view of the end section of a carrier for two teat cups;
Figure 9 is a side view of the carrier end section shown in Figure 8;
Figure 10 is a plan view of a second embodiment of a milking box, in which use is made of four carriers for carrying one teat cup each, whilst from both sides one teat cup can be moved to under the animal passing between a front leg and a hind leg and two teat cups can be brought in position by passing them between the two hind legs;
Figure 11 is a plan view of a third embodiment of a milking box, in which use is made of four carriers for carrying one teat cup each, whilst from both sides two teat cups can be moved to under the animal between front leg and a hind leg;
Figure 12 is a rear view of the milking box shown in Figure 11;
Figure 13 is a plan view of the end section of a carrier for one teat cup, and
Figure 14 is a side view of the carrier end section as shown in Figure 13.

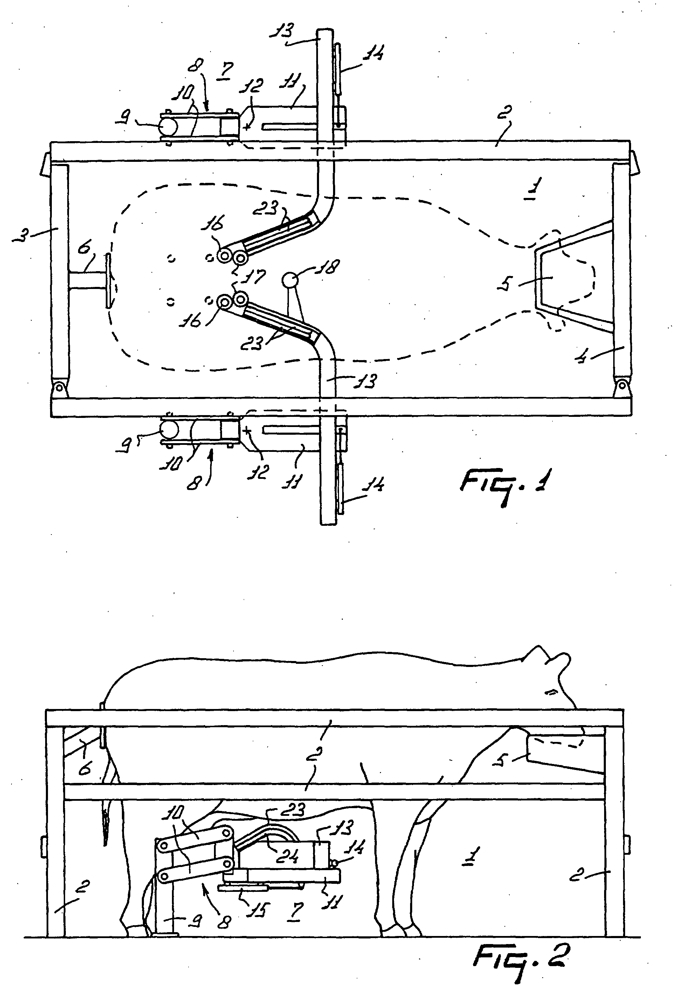

Figures 1 and 2 show a plan view and a side view, respectively, of a milking box 1 which is formed by a frame 2, which constitutes the two sides of the milking box 1, a door 3, via which an animal to be milked can enter the milking box, and a door 4, through which a milked animal can again leave the milking box. Attached to the door 4 there is a feed trough 5 which forms part of an automatic feeding system - not shown - for supplying concentrate. The door 3 is equipped with positioning means 6 for retaining an animal present in the milking box in a more or less defined position in the milking box 1. The milking box 1 is provided with a milking robot 7 which, in this embodiment, comprises two robot arm constructions 8, which are arranged on either side of the milking box 1. These robot arm constructions 8 are shown only schematically and include a vertically arranged pillar 9, to the upper end of which a parallelogram construction 10 is attached, a supporting element 11 being movable in height with the aid of this parallelogram construction 10. In addition, this supporting element 11 is pivotal about a vertical shaft 12. By means of the supporting element 11, a carrier 13 is arranged in such a manner extending in two directions, which are perpendicular to each other, that it is movable in a horizontal plane. Although the motional means for moving the supporting element 11 in the vertical direction with the aid of the parallelogram construction 10 and the motional means for pivoting same about the vertical shaft 12 are not shown in the drawings, the means with the aid of which the carrier 13 is movable with respect to the supporting element 11 in two directions which extend perpendicularly to each other are however indeed shown. Both these latter motional means and the non-shown motional means are preferably constituted by pneumatic cylinders 14 and 15. These cylinders 14 and 15 act as a kind of spring to allow a limited freedom of motion of the carrier 13, more specifically when it comes in some way or another in contact with the animal in a rough manner. The carrier 13 extends in two directions. Figure 1 shows that that portion of the carrier 13 that is connected to the supporting element 11 extends in a horizontal plane transversely to the longitudinal direction of the milking box 1, whereas the other end of the carrier 13 extends in a horizontal plane obliquely rearwardly and inwardly. Such a construction of the carriers 13 allows an easy access to the teats of the animal without being obstructed by the legs and without the carriers 13 of the teat cups interfering with each other. In this embodiment, each of the carriers 13 is suitable for carrying two teat cups 16 and 17. Because of the use of two carriers 13 of a very specifically chosen design and by arranging these carriers on both sides of the milking box 1, simultaneous coupling of two teat cups 16 or 17 to two teats is possible, as a result of which the period of time for coupling the teat cups to the teats can be significantly reduced. One of the carriers 13 is equipped with a detection device 18, such as a laser. This detection device 18 is disposed in such a manner that, when the carrier 13 to which this detection device is attached has been moved to under the animal in the position shown in Figure 1, the detection device 18 is located approximately in the midway point under the animal at the leading side of the udder. With the aid of this detection device 18, which is disposed in such a manner that it reciprocates or rotates about a vertical shaft, it is possible to determine the position of the four teats with respect to the carrier 13 to which the detection device 18 is connected. With the aid of the cylinders 14 and 15 the carrier 13, to which the detection device 18 is connected, can be moved, until the position of a teat, determined by the detection device 18, with respect to the detection device 18 corresponds to the position of a relevant teat cup on the last-mentioned carrier with respect to the detection device 18. For the displacement of the other carrier, the position of the carrier to which the detection device 18 is connected and the position, measured with the aid of the detection device 18, of the relevant teats with respect to the carrier to which the detection device 18 is connected must be taken into account.

The carriers 13 are at least partly of a tubular design and comprise a non-shown cylinder, whose end is connected to a teat cup 16, 17 via a flexible connecting element 19. This flexible connecting element 19, which may be constituted by a cord or a cable, renders it possible for the teat cup connected thereto to remain, during milking, in connection in a freely movable manner with the relevant carrier 13, more specifically by refraining from energizing, during milking, the cylinder to which the flexible connecting element 19 is connected and which is disposed in the tubular carrier 13, whilst, after milking, by energizing the last-mentioned cylinder, the teat cup can be pulled up against the end of the carrier 13. When a carrier 13 has been moved such with the aid of the cylinders 14 and 15 that one of the teat cups has been moved to under a relevant teat and is connected thereto, then, after releasing the cylinder in the tubular carrier, this carrier can be moved more in particular in such a manner that the other teat cup connected to this carrier is moved to under another teat for connection to said teat.

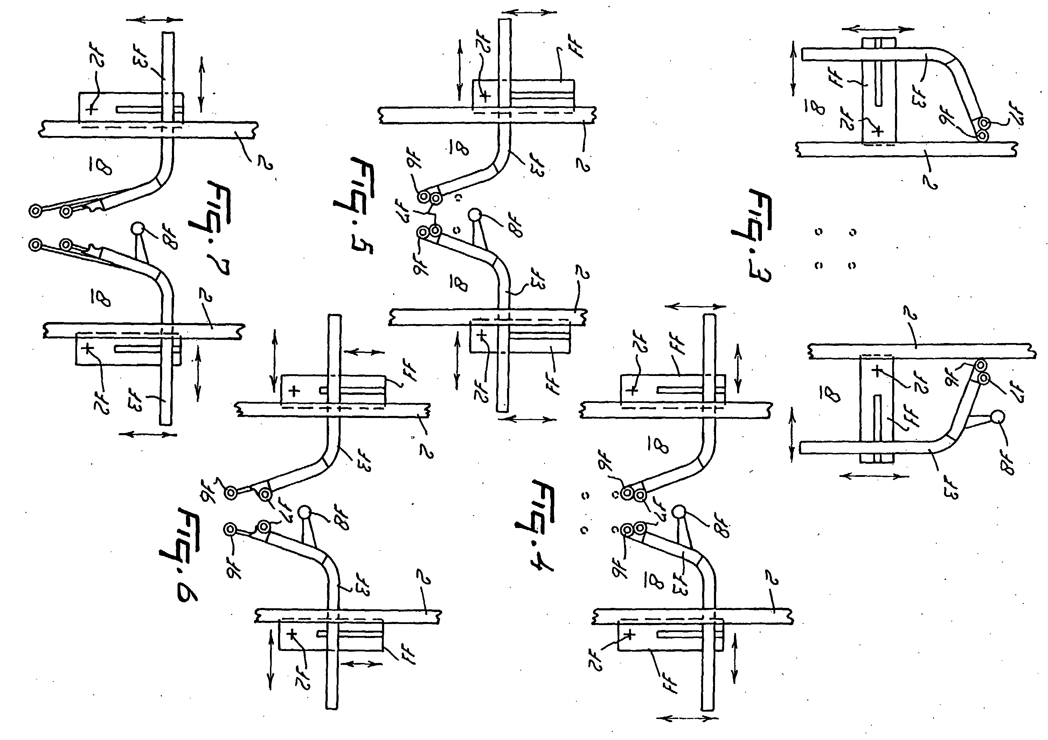

with reference to Figures 3 - 7, it will be described how the teat cups 16, 17, two of which are connected to each carrier 13, can be connected to the teats of an animal in the milking box 1.

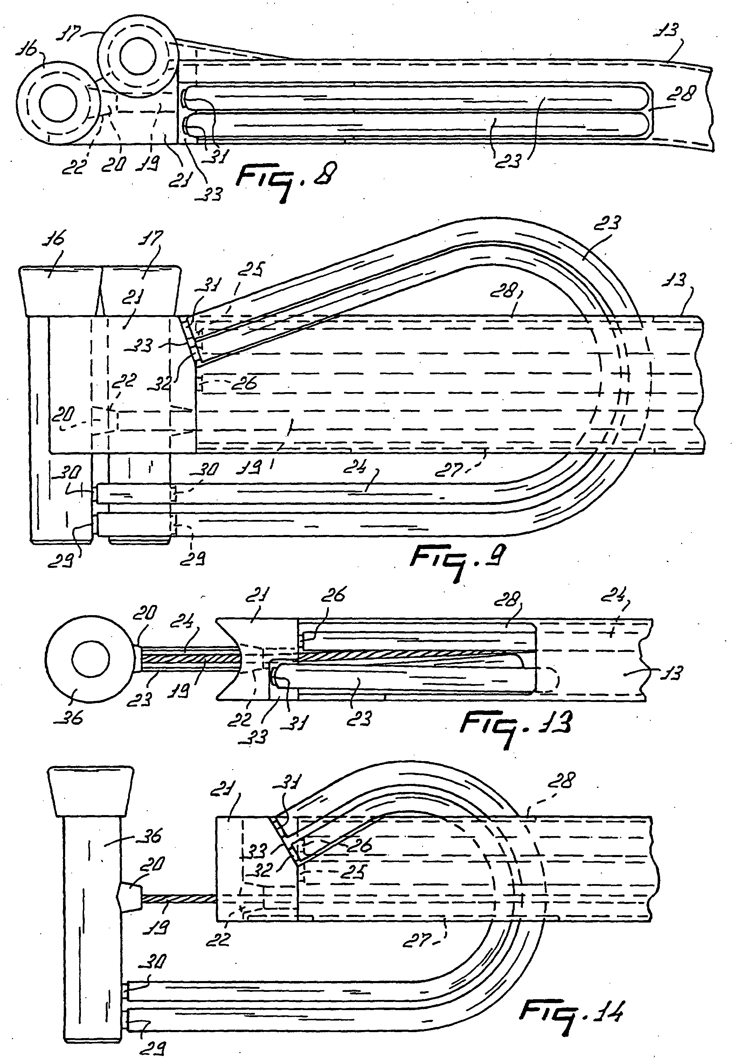

In Figure 3, the two robot arm constructions 8 are disposed on both sides of the milking box 1 in the rest condition. In this condition, an animal to be milked can enter the milking box 1; the supporting element 11 has then been pivoted in such a manner about the vertical shaft 12 that this supporting element extends outwardly transversely to the longitudinal direction of the milking box 1. The carriers 13 with the teat cups 16 and 17 are then completely outside the milking box 1. By pivoting the supporting element 11 through 90° about the shaft 12, the carriers 13 with the teat cups 16 and 17 are moved to under the animal standing in the milking box 1. In this situation, which is shown in Figure 4, the detection device 18 is in a position approximately in the midway point under the animal, more specifically at the leading side of the udder of this animal. The carriers 13 can now be moved individually or simultaneously in such a manner in two directions which are perpendicular to each other, that the teat cups 16 arrive under the rear teats of the animal, so that only an upward motion of the teat cups 16 is sufficient to connect them to these teats. This situation is shown in Figure 5. Thereafter the relevant cylinders contained in the tubular carriers, of which each cylinder is connected to a teat cup 16 via a flexible connecting element 19, are released, so that the carriers 13 can be advanced without pulling the teat cups 16 from the teats. The carriers 13 are now moved such that the teat cups 17 arrive under the leading teats of the animal, whereafter the teat cups 17 can be connected individually or simultaneously by an upward motion to the leading teats of the animal. This situation is shown in Figure 6. Thereafter the cylinders contained in the tubular carriers, each cylinder of which is connected via a flexible connecting element 19 to a teat cup 17, are de-energized, so that the carriers 13 can be advanced, resulting in that all four teat cups 16, 17 continue to be in a flexible connection with the two carriers 13, so that during milking the animal has some motional freedom without the risk that the teat cups could be pulled from the teats, which might be the case when a rigid connection of the teat cups to the carriers were used. The latter situation is shown in Figure 7.

Figures 8 and 9 show in a plan view and a side view, respectively, how the two teat cups 16 and 17 are connected to the end of a carrier 13. At its side, each teat cup is provided with a bulging portion, preferably a conical bulge 20, to which the flexible connecting element 19 is connected. That end of a carrier 13 that is located near the teat cups is provided with a through-connection element 21. This through-connection element 21 has at its exterior side two recesses 22, the shape of which corresponds to the conical bulge 20 at the side of the teat cups 16, 17. Such a conical recess 22 has a through-bore through the through-connection element 21, through which the relevant flexible connecting element 19 is passed, so that when this flexible connecting element 19 is tightened, the conical bulge 20 at the side of the relevant teat cup is pulled into the relevant conical recess 22 in the through-connection element 21. The through-connection element 21 also serves for the through-connection of the milk and/or pulsation tube leading to a teat cup. The milk tube 23 and/or the pulsation tube 24 are passed through the tubular carrier 13 to the respective points of connection 25 and 26 provided for that purpose in the through-connection element 21. In addition, the milk tube 23 and the pulsation tube 24, if present, must be of a flexible construction between the through-connection element 21 and the teat cups 16 and 17. For that purpose, the end of the tubular carrier 13 is provided at both the bottom side and the upper side with a slotted aperture 27 and 28, respectively. From the connecting points 29 and 30 of the teat cups, the milk and pulsation tubes extend one above the other, passing underneath the end of the carrier 13 and thereafter are passed upwardly through the carrier 13 through the slotted aperture 27 at the bottom side of the carrier 13 and via the slotted aperture 28 and the upper side of the carrier 13 in a loop shape over and along the carrier 13 forwardly and downwardly to the connecting points 31 and 32 at the rear side of the through-connection element 21; to that end, this rear side is provided with a bevelled plane 33. The size and the flexibility of the loop-shaped section of the milk and/or pulsation tube 23 and 24, respectively, between the teat cups 16, 17 and the through-connection element 21 in the tubular carrier 13, together with the length of the flexible connecting element 19 and the stroke of the cylinder connected to this flexible connecting element 19 determine, once the teat cups have been connected to the teats, the extent to which the carrier 13 can be withdrawn.

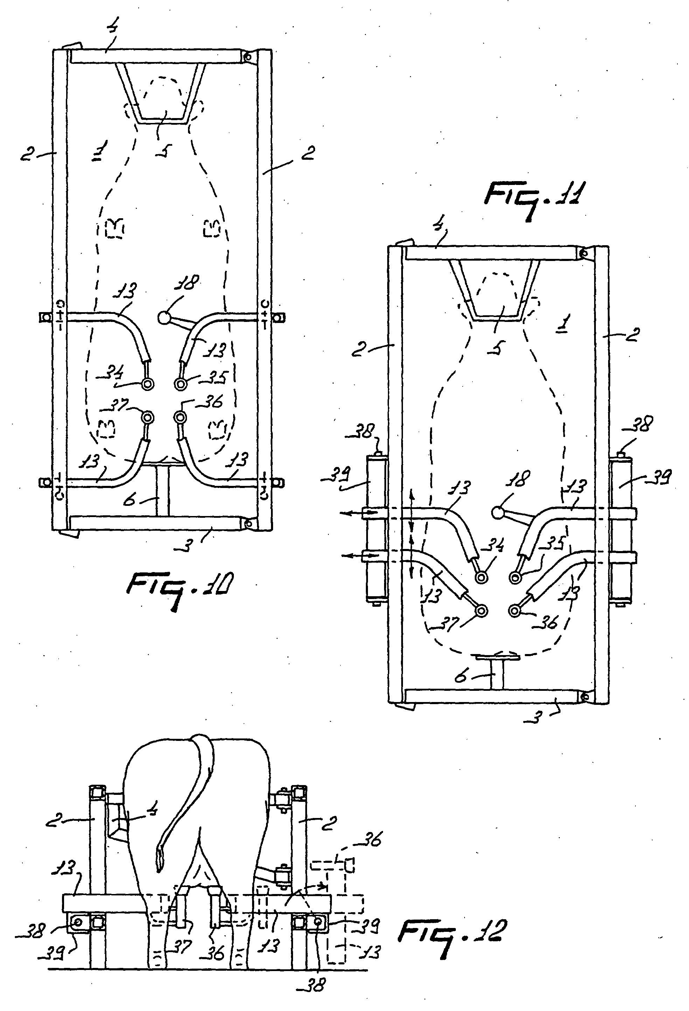

In the embodiments as illustrated in Figures 10 and 11, four carries 13, each for a teat cup 34, and 35, 36 and 37, respectively, are shown. In both cases, the carriers are arranged in the shape of a star and also here extend each in two directions. In a similar manner as shown in Figure 1, one of the carriers 13 is equipped with a detection device 18. In the embodiment shown in Figure 10, the carriers 13 are arranged such that the carriers with the teat cups 34, 35 which are to be connected to the leading teats of the animal must approach the udder from the side of the milking box 1 passing between the front and hind legs, whereas the carriers with the teat cups 36, 37 which are intended for connection to the rear teats must be moved to under the animal passing between the two hind legs. In this embodiment, the carriers 13 are still further remote from each other and can easily be moved to under the animal independently of each other, both individually and simultaneously, without interfering with each other. As is also the case in Figure 1, the carriers may again have been disposed such that they are movable in two directions and moreover are arranged pivotally near the exterior wall of the milking box 1. A similar construction as shown in Figure 1 is then possible. In Figure 11 two carriers 13, each carrying one teat cup for a leading and one for a trailing teat, are each time moved to under the udder of the animal from one side of the milking box 1 passing between a front and a hind leg. This construction is shown in a rear view in Figure 12. In this situation, the carriers 13 are pivotal about a horizontal pivot shaft 38 which extends in the lengthwise direction of the milking box 1 and, in the embodiment shown, is disposed just next to the longitudinal side wall of the milking box 1. Also in this case, the carriers 13 are movable in both the lengthwise direction of the milking box 1 and in the direction transversely thereto. A supporting element 39, onto which the carriers 13 have been disposed, is pivotal about the shaft 38. In the rest position, the carriers 13 are in a vertical position outside the milking box 1, whilst the carriers 13 are moved in a horizontal plane by having them perform a pivotal motion about the horizontal shaft 38, in which plane the teat cups can be displaced in both the transverse direction and in the lengthwise direction of the milking box 1 for being moved to under the teats of the animal. The connection of each of the teat cups 34 - 37 to a carrier 13 is here similar to the manner in which in Figures 8 and 9 two teat cups are coupled to a carrier 13. The connection of one teat cup and one carrier is shown in Figures 13 and 14. Also in this case, the teat cups is provided at its side with a conical bulging portion 20, to which a flexible connecting element 19 is secured, whilst with the aid of this flexible connecting element the conical bulging portion can be pulled into a recess 22 of a through-connection element 21. To that end, also the recess 22 has a through-bore for the flexible connecting element. Also in this case, the carrier 13 is provided at both the bottom side and the upper side with respective slotted apertures 27 and 28, so that a milk and/or pulsation tube 23 and 24, respectively, can be passed at the bottom side of the carrier 13 through the carrier 13 in the upper direction and through the slotted aperture 28 in the upper side of the carrier 13 and be connected in the shape of a loop to the through-connection element 21 in a similar manner as shown in Figure 9. Obviously, it also holds here that, when a teat cup has been connected and the carrier 13 is withdrawn, the extent to which the carrier can be withdrawn is determined by the nature of the loop in the milk and/or pulsation tube, more in particular by the flexibility of the material of both tubes, and of course the length of the flexible connecting element and the stroke of the cylinder connected thereto in the carrier. The manner of coupling a cup to a teat and the withdrawing mechanism of a cup on a carrier arm 13 are similar to those in the embodiment illustrated in Figures 8 and 9.

The invention is not limited to the embodiments described and shown here, but also relates to all kinds of modifications, of course in sofar they are within the scope of the accompanying claims.

## Claims

1. A construction for automatically milking animals, such as cows, comprising a milk box (1) with a milking robot (7) having at least two robot arm constructions (8) with carriers (13) for teat cups (16, 17, 34 - 37), which carriers (13) are movable in a horizontal plane and in an upward and downward direction, **characterized in that**, during milking, the carriers (13) of the teat cups are arranged in an approximately horizontal plane in the shape of a star around the udder of an animal.

2. A construction as claimed in claim 1, **characterized in that**, during milking, at least one carrier (13) is in a position behind a hind leg of an animal and at least one other carrier (13) in a position in front of a hind leg of this animal.

3. A construction as claimed in any one of the preceding claims, **characterized in that** two carriers (13) for two teat cups (16, 17) each are present, these carriers (13) being attached to the milking box on both sides of the milking box (1).

4. A construction as claimed in any one of the preceding claims, **characterized in that** four carriers (13) for one teat cup (34 - 37) each are present, these carriers (13) being disposed in a two-by-two relationship on both sides of the milking box (1).

5. A construction as claimed in any one of the preceding claims, **characterized in that** a carrier (13) is disposed in such a manner near a side wall of the milking box (1) that it is movable in at least two directions which, preferably, are perpendicular to each other.

6. A construction as claimed in claim 5, **characterized in that** a carrier (13) is pivotal from a rest position to a working position and, in this working position, is movable in a predominantly horizontal plane in two directions which are approximately perpendicular to each other.

7. A construction as claimed in claim 6, **characterized in that** a carrier (13) can be moved under the udder of an animal in both the lengthwise direction and the transverse direction of the milking box (1).

8. A construction as claimed in claim 6 or 7, **characterized in that** a carrier (15) is disposed capably of being moved in two directions which are approximately perpendicular to each other on a supporting element (11) which is pivotal about a predominantly vertical shaft (12), whilst by pivoting it about this shaft (12) the carrier (13) can be moved from the rest position to the working position.

9. A construction as claimed in claim 8, **characterized in that** the supporting element (11) is disposed capably of being moved in height, for example by means of a parallelogram construction (10), at the exterior side of and near a side wall of the milking box (1).

10. A construction as claimed in claim 6 or 7, **characterized in that** a carrier (13) is disposed capably of being moved in two directions which are mainly perpendicular to each other on a supporting element (11) which is pivotal about a predominantly horizontal shaft (38) extending in the lengthwise direction of the milking box (1), whilst by pivoting about this shaft (38) the carrier (13) can be moved from the rest position to the working position.

11. A construction as claimed in any one of claims 8 - 10, **characterized in that** the shaft (38) extends along the exterior side of and near a side wall of the milking box (1).

12. A construction as claimed in any one of the preceding claims, **characterized in that** a detection device (18), such as a laser, is present, which is connected to one of the carriers (13), with the aid of which detection device (18) the position of the teats of an animal can be determined.

13. A construction as claimed in claim 12, **characterized in that**, when the carrier to which the detection device (18) is connected has been adjusted to the working position and has been moved in such a manner that the teat cup or teat cups carried thereby are under the udder of the animal, the detection device (18) is in a position approximately in the midway point under the animal at the leading side of the udder.

14. A construction as claimed in any one of the preceding claims, **characterized in that** at least the end of a carrier (13) where it carries one or more teat cups (16, 17, 34 - 37) is of a tubular structure.

15. A construction as claimed in claim 14, **characterized in that** a teat cup (16, 17, 34 - 37) is connected with the aid of a flexible connecting element (19), such as a cord or cable, in such a manner that, during milking, it can move freely and, after milking, is pulled up against the end of this carrier (13).

16. A construction as claimed in claim 15, **characterized in that** the flexible connecting element (19) is disposed in the tubular portion of the carrier (13).

17. A construction as claimed in any one of claims 14 - 16, **characterized in that** a teat cup (16, 17, 34 - 37) is provided, at its side, with a bulging portion (20) which can be pulled into a correspondingly shaped recess (22) in the end of a carrier (13) with the aid of a flexible connecting element (19).

18. A construction as claimed in any one of claims 14 - 17, **characterized in that**, at or near the end of a tubular carrier (13), a through-connection element (21) is incorporated therein for one or more milk (23) and/or pulsation (24) tubes.

19. A construction as claimed in claim 18, **characterized in that** the through-connection element (21) is provided with a pierced recess (22), it being possible to pull, with the aid of a flexible connecting element (19) passed through the recess (22), a teat cup (16, 17, 34 - 37) into this recess (22) against the carrier (13) by means of a bulging portion (20) provided at the side of the cup.

20. A construction as claimed in claim 18 or 19, **characterized in that** the section of the milk (23) and/or pulsation (24) tube between a teat cup (16, 17, 34 - 37) and the through-connection element (21) extends in the form of a loop.

21. A construction as claimed in claim 20, **characterized in that** the section of the milk (23) and/or pulsation (24) tube between a teat cup (16, 17, 34 - 37) and the through-connection element (21) is connected from the teat cup to the through-connection element (21) via a slotted aperture (27) in the bottom side of the tubular portion of the carrier (13) through this tubular portion of the carrier (13) and through a slotted aperture (28) in the upper side of the tubular portion of the carrier (13).

22. A construction as claimed in any one of claims 18 - 21, **characterized in that** the through-connection element (21) is suitable for accommodating the milk (23) and/or pulsation (24) tube of two teat cups (16, 17), whilst the through-connection element (21) is provided with two recesses (22) into which the two teat cups (16, 17), provided with a bulging portion (20), can be pulled.

23. A construction as claimed in claim 22, **characterized in that**, in the tightened state, the two teat cups are disposed substantially in contact with each other at the end of a carrier (13).

## Patentansprüche

1. Vorrichtung zum automatischen Melken von Tieren, wie z. B. Kühen, die eine Melkbox (1) mit einem Melkroboter (7) umfaßt, der mindestens zwei Roboterarm-Konstruktionen (8) mit Trägern (13) für Zitzenbecher (16, 17, 34 bis 37) aufweist, wobei die Träger (13) in einer horizontalen Ebene und nach oben und unten bewegbar sind,
**dadurch gekennzeichnet, daß** die Träger (13) der Zitzenbecher während des Melkens in einer annähernd horizontalen Ebene sternförmig um das Euter eines Tieres angeordnet sind.

2. Vorrichtung nach Anspruch 1,
**dadurch gekennzeichnet, daß** sich während des Melkens mindestens ein Träger (13) in einer Position hinter einem Hinterbein eines Tieres und mindestens ein anderer Träger (13) in einer Position vor einem Hinterbein dieses Tieres befindet.

3. Vorrichtung nach einem der vorhergehenden Ansprüche,
**dadurch gekennzeichnet, daß** zwei Träger (13) für jeweils zwei Zitzenbecher (16, 17) vorhanden sind, wobei diese Träger (13) an der Melkbox an beiden Seiten der Melkbox (1) befestigt sind.

4. Vorrichtung nach einem der vorhergehenden Ansprüche,
**dadurch gekennzeichnet, daß** vier Träger (13) mit jeweils einem Zitzenbecher (34 bis 37) vorhanden sind, wobei diese Träger (13) paarweise an beiden Seiten der Melkbox (1) angeordnet sind.

5. Vorrichtung nach einem der vorhergehenden Ansprüche,
**dadurch gekennzeichnet, daß** ein Träger (13) nahe einer Seitenwand der Melkbox (1) derart angeordnet ist, daß er in mindestens zwei Richtungen bewegbar ist, die vorzugsweise rechtwinklig zueinander verlaufen.

6. Vorrichtung nach Anspruch 5,
**dadurch gekennzeichnet, daß** ein Träger (13) aus einer Ruhelage in eine Arbeitslage schwenkbar ist und in dieser Arbeitslage in einer überwiegend horizontalen Ebene in zwei Richtungen bewegbar ist, die annähernd rechtwinklig zueinander verlaufen.

7. Vorrichtung nach Anspruch 6,
**dadurch gekennzeichnet, daß** ein Träger (13) sowohl in Längsrichtung als auch in Querrichtung der Melkbox (1) unter das Euter eines Tieres bewegt werden kann.

8. Vorrichtung nach Anspruch 6 oder 7,
**dadurch gekennzeichnet, daß** ein Träger (15) in zwei annähernd rechtwinklig zueinander verlaufenden Richtungen bewegbar an einem Stützelement (11) angeordnet ist, das um eine überwiegend vertikale Achse (12) schwenkbar ist, wobei der Träger (13) durch Schwenken um diese Achse (12) aus der Ruhelage in die Arbeitslage bewegt werden kann.

9. Vorrichtung nach Anspruch 8,
**dadurch gekennzeichnet, daß** das Stützelement (11) beispielsweise mittels einer Parallelogrammführung (10) höhenbewegbar an der Außenseite und nahe einer Seitenwand der Melkbox (1) angeordnet ist.

10. Vorrichtung nach Anspruch 6 oder 7,
**dadurch gekennzeichnet, daß** ein Träger (13) in zwei im wesentlichen rechtwinklig zueinander verlaufenden Richtungen bewegbar an einem Stützelement (11) angeordnet ist, das um eine überwiegend horizontale Achse (38) schwenkbar ist, die sich in Längsrichtung der Melkbox (1) erstreckt, wobei der Träger (13) durch Schwenken um diese Achse (38) aus der Ruhelage in die Arbeitslage bewegt werden kann.

11. Vorrichtung nach einem der Ansprüche 8 bis 10,
**dadurch gekennzeichnet, daß** sich die Achse (38) entlang der Außenseite und nahe einer Seitenwand der Melkbox (1) erstreckt.

12. Vorrichtung nach einem der vorhergehenden Ansprüche,
**dadurch gekennzeichnet, daß** eine Ermittlungsvorrichtung (18), wie z. B. ein Laser, vorhanden ist, die mit einem der Träger (13) verbunden ist, wobei mit Hilfe der Ermittlungsvorrichtung (18) die Position der Zitzen eines Tieres ermittelt werden kann.

13. Vorrichtung nach Anspruch 12,
**dadurch gekennzeichnet, daß** die Ermittlungsvorrichtung (18) in einer etwa mittigen Lage unter dem Tier an der Vorderseite des Euters positioniert ist, wenn der Träger, mit dem die Ermittlungsvorrichtung (18) verbunden ist, in die Arbeitslage eingestellt und derart bewegt worden ist, daß sich der oder die von ihm getragenen Zitzenbecher unter dem Euter des Tieres befinden.

14. Vorrichtung nach einem der vorhergehenden Ansprüche,
**dadurch gekennzeichnet, daß** zumindest das einen oder mehrere Zitzenbecher (16, 17, 34 bis 37) tragende Ende eines Trägers (13) rohrförmig ausgebildet ist.

15. Vorrichtung nach Anspruch 14,
**dadurch gekennzeichnet, daß** ein Zitzenbecher (16, 17, 34 bis 37) mit Hilfe eines flexiblen Verbindungselementes (19), wie z. B. ein Seil oder Kabel, derart angeschlossen ist, daß er sich während des Melkens frei bewegen kann und nach dem Melken gegen das Ende dieses Trägers (13) gezogen wird.

16. Vorrichtung nach Anspruch 15,
**dadurch gekennzeichnet, daß** das flexible Verbindungselement (19) in dem rohrförmigen Teil des Trägers (13) angeordnet ist.

17. Vorrichtung nach einem der Ansprüche 14 bis 16,
**dadurch gekennzeichnet, daß** ein Zitzenbecher (16, 17, 34 bis 37) an seiner Seite mit einer Ausbuchtung (20) versehen ist, die mit Hilfe eines flexiblen Verbindungselementes (19) in eine entsprechend geformte Ausnehmung (22) im Ende eines Trägers (13) gezogen werden kann.

18. Vorrichtung nach einem der Ansprüche 14 bis 17,
**dadurch gekennzeichnet, daß** an oder nahe dem Ende eines rohrförmigen Trägers (13) innerhalb desselben ein Anschlußelement (21) für eine oder mehrere Milchleitungen (23) und/oder Pulsierleitungen (24) angeordnet ist.

19. Vorrichtung nach Anspruch 18,
**dadurch gekennzeichnet, daß** das Anschlußelement (21) mit einer gelochten Ausnehmung (22) versehen ist, wobei es möglich ist, mit Hilfe eines flexiblen Verbindungselementes (19), das durch die Ausnehmung (22) hindurchgeführt ist, einen Zitzenbecher (16, 17, 34 bis 37) mit einer an der Seite des Zitzenbechers vorgesehenen Ausbuchtung (20) gegen den Träger (13) in diese Ausnehmung (22) hineinzuziehen.

20. Vorrichtung nach Anspruch 18 oder 19,
**dadurch gekennzeichnet, daß** der zwischen einem Zitzenbecher (16, 17, 34 bis 37) und dem Anschlußelement (21) liegende Abschnitt der Milchleitung (23) und/oder der Pulsierleitung (24) in Form einer Schlaufe angeordnet ist.

21. Vorrichtung nach Anspruch 20,
**dadurch gekennzeichnet, daß** die Verbindung des zwischen einem Zitzenbecher (16, 17, 34 bis 37) und dem Anschlußelement (21) liegenden Abschnittes der Milchleitung (23) und/oder der Pulsierleitung (24) mit dem Zitzenbecher und dem Anschlußelement (21) über eine schlitzförmige Öffnung (27) in der Unterseite des rohrförmigen Teiles des Trägers (13) hergestellt wird, derart, daß der Leitungsabschnitt durch diesen rohrförmigen Teil des Trägers (13) und durch eine schlitzförmige Öffnung (28) in der Oberseite des rohrförmigen Teiles des Trägers (13) hindurchgeführt ist.

22. Vorrichtung nach einem der Ansprüche 18 bis 21,
**dadurch gekennzeichnet, daß** das Anschlußelement (21) für die Milchleitung (23) und/oder die Pulsierleitung (24) zweier Zitzenbecher (16, 17) ausgelegt ist, wobei das Anschlußelement (21) zwei Ausnehmungen (22) aufweist, in die die beiden mit einer Ausbuchtung (20) versehenen Zitzenbecher (16, 17) hineingezogen werden können.

23. Vorrichtung nach Anspruch 22,
**dadurch gekennzeichnet, daß** die beiden Zitzenbecher in angezogenem Zustand im wesentlichen einander berührend am Ende eines Trägers (13) angeordnet sind.

## Revendications

1. Installation de traite automatique d'animaux, tels que des vaches, comportant un box de traite (1) muni d'un robot de traite (7) ayant au moins deux structures formant bras de robot (8) munies de supports (13) de gobelets trayeurs (16, 17, 34 à 37), supports (13) qui sont mobiles dans un plan horizontal, ainsi que vers le haut et vers le bas, **caractérisée en ce que**, pendant une traite, les supports (13) des gobelets trayeurs sont agencés dans un plan approximativement horizontal sous 1a forme d'une étoile autour du pis d'un animal.

2. Installation selon la revendication 1, **caractérisée en ce que**, pendant une traite, au moins un premier support (13) est dans une position située derrière une patte arrière d'un animal, et au moins un autre support (13) est dans une position située devant une patte arrière de cet animal.

3. Installation selon l'une quelconque des revendications précédentes, **caractérisée en ce que** deux supports (13) destinés à deux gobelets trayeurs (16, 17) sont chacun présents, ces supports (13) étant fixés sur le box de traite des deux côtés du box de traite (1).

4. Installation selon l'une quelconque des revendications précédentes, **caractérisée en ce que** quatre supports (13) destinés à un gobelet trayeur (34 à 37) sont chacun présents, ces supports (13) étant disposés dans une disposition deux par deux des deux côtés du box de traite (1).

5. Installation selon l'une quelconque des revendications précédentes, **caractérisée en ce qu'**un support 13 est disposé à proximité d'une paroi latérale du box de traite (1) d'une manière telle qu'il est mobile dans au moins deux directions qui, de préférence, sont perpendiculaires l'une par rapport à l'autre.

6. Installation selon la revendication 5, **caractérisée en ce qu'**un support (13) peut pivoter à partir d'une position de repos vers une position active et, dans cette position active, est mobile dans un plan de manière prédominante horizontal dans deux directions qui sont approximativement perpendiculaires l'une par rapport à l'autre.

7. Installation selon la revendication 6, **caractérisée en ce qu'**un support (13) peut être déplacé sous le pis d'un animal dans la direction longitudinale et dans la direction transversale du box de traite (1).

8. Installation selon la revendication 6 ou 7, **caractérisée en ce qu'**un support (15) est disposé pouvant être déplacé dans deux directions, qui sont approximativement perpendiculaires l'une par rapport à l'autre, sur un élément de support (11) qui peut pivoter autour d'un arbre de manière prédominante vertical (12), tandis qu'en pivotant autour de cet arbre (12), le support (13) peut être déplacé à partir de la position de repos vers la position active.

9. Installation selon 1a revendication 8, **caractérisée en ce que** l'élément de support (11) est disposé pouvant être déplacé en hauteur, par exemple par l'intermédiaire d'une construction en parallélogramme (10), au niveau du côté extérieur d'une paroi latérale du box de traite (1) et à proximité de celui-ci.

10. Installation selon la revendication 6 ou 7, **caractérisée en ce qu'**un support (13) est disposé pouvant être déplacé dans deux directions, qui sont principalement perpendiculaires l'une par rapport à l'autre, sur un élément de support (11) qui peut pivoter autour d'un arbre de manière prédominante horizontal (38) s'étendant dans la direction longitudinale du box de traite (1), tandis qu'en pivotant autour de cet arbre (38), le support (13) peut être déplacé de la position de repos vers la position active.

11. Installation selon l'une quelconque des revendications 8 à 10, **caractérisée en ce que** l'arbre (38) s'étend le long du côté extérieur d'une paroi latérale du box de traite (1), et à proximité de celui-ci.

12. Installation selon l'une quelconque des revendications précédentes, **caractérisée en ce qu'**un dispositif de détection (18), tel qu'un laser, est présent, qui est connecté à l'un des supports (13), dispositif de détection (18) à l'aide duquel la position des trayons d'un animal peut être déterminée.

13. Installation selon la revendication 12, **caractérisée en ce que**, lorsque le support auquel est connecté le dispositif de détection (18) a été ajusté vers la position active et a été déplacé d'une manière telle que le gobelet trayeur ou les gobelets trayeurs transportés de cette façon sont sous le pis de l'animal, le dispositif de détection (18) est dans une position située approximativement au milieu sous l'animal, au niveau du côté avant du pis.

14. Installation selon l'une quelconque des revendications précédentes, **caractérisée en ce qu'**au moins l'extrémité d'un support (13), où sont transportés un ou plusieurs gobelets trayeurs (16, 17, 34 à 37), a une structure tubulaire.

15. Installation selon la revendication 14, **caractérisée en ce qu'**un gobelet trayeur (16, 17, 34 à 37) est connecté à l'aide d'un élément de connexion souple (19), tel qu'une corde ou un câble, d'une manière telle que, pendant une traite, il peut se déplacer librement et, après une traite, il est tiré contre l'extrémité de ce support (13).

16. Installation selon la revendication 15, **caractérisée en ce que** l'élément de connexion souple (19) est disposé dans la partie tubulaire du support (13).

17. Installation selon l'une quelconque des revendications 14 à 16, **caractérisée en ce qu'**un gobelet trayeur (16, 17, 34 à 37) est muni, sur le côté, d'une partie de renflement (20) qui peut être, à l'aide d'un élément de connexion souple (19), tirée dans un évidement (22) mis en forme de manière correspondante dans l'extrémité d'un support (13).

18. Installation selon l'une quelconque des revendications 14 à 17, **caractérisée en ce que**, à l'extrémité d'un support tubulaire (13), ou à proximité de celle-ci, un élément formant connexion traversante (21) est incorporé dedans pour un ou plusieurs tubes à lait (23) et/ou de pulsations (24).

19. Installation selon la revendication 18, **caractérisée en ce que** l'élément formant connexion traversante (21) est muni d'un évidement percé (22), pour permettre de tirer, à l'aide d'un élément de connexion souple (19) passé à travers l'évidement (22), un gobelet trayeur (16, 17, 34 à 37) dans cet évidement (22) contre le support (13) par l'intermédiaire d'une partie de renflement (20) agencée sur le côté du gobelet.

20. Installation selon l'une quelconque des revendications 18 ou 19, **caractérisée en ce que** le tronçon du tube à lait (23) et/ou de pulsations (24) situé entre un gobelet trayeur (16, 17, 34 à 37) et l'élément formant connexion traversante (21) s'étend sous la forme d'une boucle.

21. Installation selon la revendication 20, **caractérisée en ce que** le tronçon du tube à lait (23) et/ou de pulsations (24) situé entre un gobelet trayeur (16, 17, 34 à 37) et l'élément formant connexion traversante (21) est connecté à partir du gobelet trayeur à l'élément formant connexion traversante (21) via une ouverture entaillée (27) située dans le côté inférieur de la partie tubulaire du support (13) à travers cette partie tubulaire du support (13), et à travers une ouverture entaillée (28) située dans le côté supérieur de la partie tubulaire du support (13).

22. Installation selon l'une quelconque des revendications 18 à 21, **caractérisée en ce que** l'élément formant connexion traversante (21) est approprié pour recevoir le tube à lait (23) et/ou de pulsations (24) de deux gobelets trayeurs (16, 17), tandis que l'élément formant connexion traversante (21) est muni de deux évidements (22) dans lesquels on peut tirer les deux gobelets trayeurs (16, 17) munis d'une partie de renflement (20).

23. Installation selon la revendication 22, **caractérisée en ce que**, dans l'état serré, les deux gobelets trayeurs sont disposés sensiblement en contact l'un avec l'autre au niveau de l'extrémité d'un support (13).
